# EUROPÄISCHE PATENTSCHRIFT

(11) **EP 1 111 363 B1**
(45) Veröffentlichungstag und Bekanntmachung des Hinweises auf die Patenterteilung: **06.10.2010**
(21) Anmeldenummer: 00116952.3
(22) Anmeldetag: 07.08.2000
(51) Int. Cl.: G01M 13/04

(54) **Verfahren zur Analyse von Wälzlagern in Machinen**
Procedure for analyzing machine roller bearings
Procédé d'analyse de paliers à roulements de machines

(30) Priorität: 16.08.1999 DE 19938722
(43) Veröffentlichungstag der Anmeldung: 27.06.2001
(73) Patentinhaber: Prüftechnik Dieter Busch AG, 85737 Ismaning (DE)
(72) Erfinder: Lysen, Heinrich, 85748 Garching (DE)
(74) Vertreter: Schwan - Schwan - Schorer

(56) Entgegenhaltungen:
- DE-A- 2 947 937
- AFSHARI NADER ET AL: "Model-based technique for the fault detection of rolling element bearings using Detection Filter Design and sliding mode technique" PROCEEDINGS OF THE 1998 37TH IEEE CONFERENCE ON DECISION AND CONTROL (CDC);TAMPA, FL, USA DEC 16-DEC 18 1998, Bd. 3, 1998, Seiten 2593-2598, XP002237459 Proc IEEE Conf Decis Control;Proceedings of the IEEE Conference on Decision and Control 1998 IEEE, Piscataway, NJ, USA

## Beschreibung

Die vorliegende Erfindung betrifft ein Verfahren und eine Vorrichtung zur Analyse von in Maschinen eingebauten Wälzlagern, wobei mittels eines Sensors ein Signal aufgenommen wird, welches durch die Wälzkörperbewegung erzeugt wird, und die Amplitude des Signals ausgewertet wird, um das Vorliegen und gegebenenfalls die Tiefe eines Schadens in einer Wälzlagerlauffläche zu ermitteln.

Schäden auf der Lauffläche von Wälzlagerringen führen im Betrieb des Lagers jedesmal dann, wenn ein Wälzkörper die Schadensstelle überrollt, zu einer Schwingungsanregung des Wälzlagers und der damit mechanisch gekoppelten Maschinenelemente. Dabei wird üblicherweise mittels eines beispielsweise an den Lagerbock angekoppelten Beschleunigungsaufnehmers ein Beschleunigungssignal ermittelt, das aus der Auslenkung bzw, Kraftaufnahme des Wälzkörpers an der Schadensstelle resultiert. Zur Diagnose des Wälzlagerzustands ist insbesondere die Schadenstiefe von vorhandenen Schäden von Interesse.

Eine Übersicht über schwingungsdiagnostische Verfahren für Wälzlager ist aus Kapitel 6.1 von "Schwingungsdiagnostische Beurteilung von Maschinen und Anlagen" von Ulrich Klein, herausgegeben vom Verein für Betriebsfestigkeitsforschung, Verlag Stahl - Eisen, Düsseldorf 1998, bekannt. Darin ist beispielsweise eine Beschreibung von Aufnehmer-Resonanztechniken zu finden, wobei das Sensorsignal einer Bandpaßfilterung um die Resonanzfrequenz des Sensors unterzogen wird. Bei der Stoß-Impuls-Messung erfolgt eine Mittelwertbildung des Aufnehmersignals, während bei der SEE-Methode die zeitliche Ableitung der Beschleunigung gebildet und deren Intensität im Bereich hoher Frequenzen bis 300 kHz analysiert wird. Bei der Spike-Energy-Methode werden der bandpaßbegrenzte Beschleunigungsmittelwert, die Hüllkurve der Wechselamplituden sowie der Scheitelwert gegenüber dem Effektivwert analysiert, wobei die Ergebnisse mittels einer empirisch ermittelten Normierung auf die Drehzahl und den Lagerdurchmesser bewertet werden. Nachteilig bei diesem Verfahren ist, daß Schäden am Innenring kaum erfaßbar sind und ferner für bestimmte Maschinenarten die Normierung nicht zutreffend ist. Ferner sind in dem genannten Buch Verfahren beschrieben, bei welchen die Spitzenhaltigkeit der Amplitudenverteilung bzw. die statistische Verteilung bewertet werden.

Ferner wurde zur Normierung der Beschleunigungssignalamplitude nach einer Hüllkurvenbildung im Zeitbereich versucht, aus den Strukturresonanzen bzw. Klangfrequenzen der Lagerbauteile auf die Übertragungsfunktion der Schadensanregung zu schließen. Dieses Verfahren lieferte jedoch keine zufriedenstellenden Ergebnisse, da die Strukturresonanzen bzw. Klangfrequenzen der Lagerbauteile im nicht eingespannten Zustand kaum Rückschlüsse auf das Übertragungsverhalten des montierten Lagers zulassen.

Weitere Beispiele für die Auswertung des Hüllkurvensignals im Zeitbereich finden sich in US 4 007 630 und US 3 554 012.

Aus der DE 29 47 937 A1 ist ein gattungsgemäßes Verfahren zur Analyse von Wälzlagern bekannt, wobei erwähnt wird, dass die Impulshöhe eines mittels Dehnungsmessstreifen gewonnenen Schwingungsmesssignals ein Maß für die Schadenstiefe darstellt.

Aus N. Afshari et al. "Model-based technique for the fault-detection of rolling element bearings using detection filter design and sliding mode technique", Proceedings of the 1998 37th IEEE Conference on Decision and Control (CDC); Tampa, Florida, USA, December 1998, Band 3, 1998, Seiten 2593-2598, XP 002237459 Proc IEEE Conf Decis Control ist es bekannt, ein Schwingungsmodell eines Wälzlagers unter Berücksichtigung der beiderseitigen Kontaktsteifigkeiten der Wälzkörper aufzustellen, um Schwingungssignale auszuwerten, wobei eine Übertragungsfunktion zwischen einer von dem Schaden verursachten Kraft und dem entsprechenden Schwingungssignal verwendet wird. Das Schwingungsmodell wird bei der Auswertung von gemessenen Beschleunigungssignalen verwendet, um das Vorliegen eines Schadens zu erkennen; eine Quantifizierung des Schadens wird nicht vorgenommen.

Es ist Aufgabe der vorliegenden Erfindung, ein Verfahren zur Analyse von Wälzlagern in Maschinen zu schaffen, mittels welchem bzw. welcher aus der Signalamplitude in zuverlässiger Weise Rückschlüsse auf die Tiefe von Schäden in einer Wälzlagerlauffläche möglich sind.

Diese Aufgabe wird erfindungsgemäß durch ein Verfahren gemäß Anspruch 1 gelöst.

Bei der erfindungsgemäßen Lösung ist vorteilhaft, daß durch die zumindest näherungsweise Ermittlung der Übertragungsfunktion eine realistische Normierung der Signalamplitude ermöglicht wird, so daß eine zuverlässige Bewertung der Schadenstiefe ermöglicht wird.

Bevorzugte Ausgestaltungen der Erfindung ergeben sich aus den Unteransprüchen.

Eine Ausführungsform der Erfindung ist anhand der beiliegenden Zeichnungen beispielhaft näher erläutert. Dabei zeigen:
- Fig. 1: schematisch eine Seitenansicht einer Maschine mit zwei Radialwälzlagern;
- Fig. 2: eine Stirnansicht der Maschine aus Fig. 1;
- Fig. 3: schematisch ein Schwingungsmodell der Maschine aus Fig. 1 und 2;
- Fig. 4: beispielhaft die frequenzabhängige Übertragungsfunktion für einen Innenringschaden bzw. einen Außenringschaden;
- Fig. 5: eine beispielhafte frequenzabhängige Übertragungsfunktion für einen Innenringschaden (gestrichelte Linie) sowie eine erfindungsgemäß linearisierte Übertragungsfunktion (durchgezogene Linie);
- Fig. 6: das Gleiche wie Fig. 5, jedoch für einen Außenringschaden;
- Fig. 7: schematisch einen Laufflächenschaden, der gerade von einem Wälzkörper überrollt wird;
- Fig. 8: beispielhaft den Informationsfluß bei einer erfindungsgemäßen Wälzkörperanalysevorrichtung;
- Fig. 9: schematisch den Aufbau einer erfindungsgemäßen Wälzlageranalysevorrichtung;
- Fig. 10: den beispielhaften Verlauf eines Schadensprofils und der entsprechenden Weg-, Geschwindigkeits- und Beschleunigungssignale sowie eine Summe daraus; und
- Fig. 11: die Frequenzgänge des Weg-, Geschwindigkeits- und Beschleunigungssignals sowie einer Summe daraus.

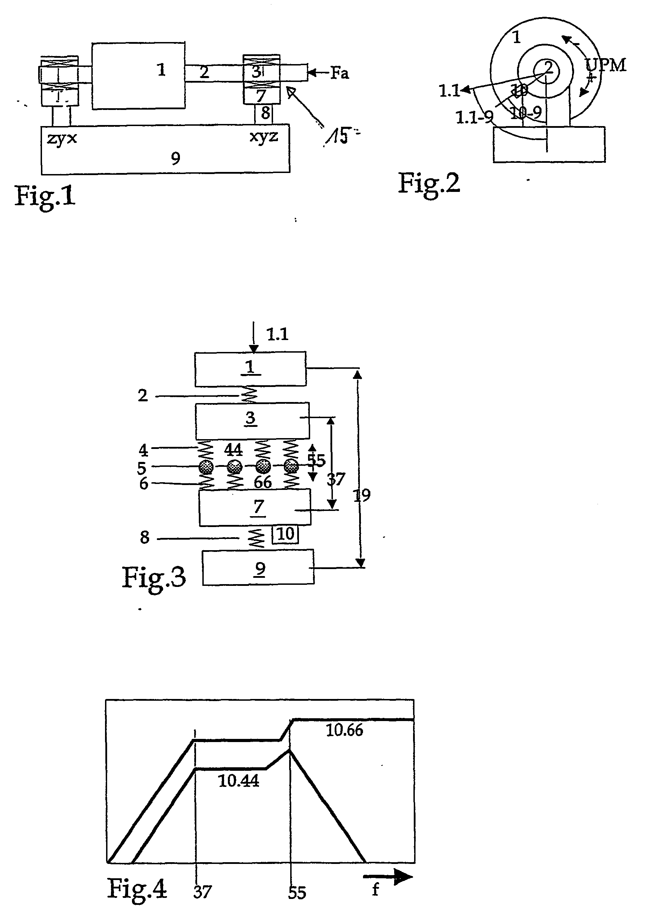

Die in den Fign. 1 und 2 dargestellte Maschine umfaßt einen Rotor mit einer Masse 1, eine Welle mit einer Steifigkeit 2 und einer Masse 3, die mit dem (nicht dargestellten) Innenring eines Wälzlagers 15 verbunden ist, einen Lagerbock mit einer Masse 7 und einer Steifigkeit 8, der mit dem (nicht dargestellten) Außenring des Wälzlagers 15 verbunden ist, sowie ein Maschinenfündament mit einer Masse 9, wobei an den Lagerbock 7 ein Beschleunigungsaufnehmer 10 angekoppelt ist. Das als Radiallager ausgebildete Wälzlager 15 umfaßt mehrere Wälzkörper, die eine Wälzkörperkontaktsteifigkeit 4 bezüglich ihres Kontakts mit dem Innenring, eine Wälzkörperkontaktsteifigkeit 6 bezüglich ihres Kontakts mit dem Außenring sowie eine Masse 5 haben. In Fig. 1 ist die Drehrichtung des Rotors 1 mit UPM, die Zusatzkraft zur Schwerkraft bzw. Gleichlast (beispielsweise eine Unwuchtkraft) mit 1.1, der Winkel zwischen der Richtung des Aufnehmers 10 der Schwerkraftrichtung mit 10-9 und der Winkel zwischen Zusatzkraft und Schwerkraft mit 1.1-9 bezeichnet.

Fig. 3 zeigt ein Schwingungsmodell für die Maschine von Fig. 1 und 2, wobei die Rotormasse 1 über die Wellensteifigkeit 2 mit der Wellenmasse 3 gekoppelt ist, an welche die Wälzkörpermassen 5 über die Wälzkörperkontaktsteifigkeit 4 gekoppelt sind (d.h. die Wälzkörpermassen 5 sind über die Kontaktsteifigkeit 4 mit dem Innenring gekoppelt). Ferner sind die Wälzkörpermassen 5 über die Wälzkörperkontaktsteifigkeit 6 mit der Lagerbockmasse 7 gekoppelt (d.h. die Wälzkörpermassen 5 sind über die Kontaktsteifigkeit 6 mit dem Außenring gekoppelt), wobei die Lagerbockmasse 7, an welche der Beschleunigungsaufnehmer 10 gekoppelt ist, über die Lagerbocksteifigkeit 8 mit der Maschinenfundamentmasse 9 gekoppelt ist. Zusätzlich zu der Schwerkraft der Massen 1, 3, 5, 7 und 9 wirkt in dem System die Zusatzlast 1.1 (beispielsweise eine Unwucht) auf die Rotormasse 1. Das System aus Fig. 3 hat drei wesentliche Resonanzfrequenzen, nämlich die mit 55 bezeichnete Resonanz bzw. Resonanzfrequenz der Wälzkörper 5, die mit 37 bezeichnete Resonanz bzw. Resonanzfrequenz zwischen Wellenmasse 3 und Lagerbockmasse 7 (im folgenden als Lagerresonanz bezeichnet) sowie die mit 19 bezeichnete Resonanz bzw. Resonanzfrequenz zwischen der Rotormasse 1 und der Fundamentmasse 9. Die Strukturresonanzen bzw. Klangresonanzen der einzelnen Maschinenelemente bzw. Lagerelemente, d.h. die Resonanzen im ungekoppelten bzw. freien Zustand, spielen bei dem für die Auswertung des Signals des Aufnehmers 10 verwendeten Schwingungsmodell von Fig. 3 keine Rolle.

Bezüglich der Wälzkörperkontaktsteifigkeiten 4 und 6 sind folgende Besonderheiten zu berücksichtigen: Die Wälzkörperkontaktsteifigkeiten 4 und 6 sind in gewissem Umfang kraftabhängig, wobei die Kraft von der Anzahl der momentan tragenden Wälzkörper abhängt. Die Anzahl der tragenden Wälzkörper wiederum hängt von der Lagerluft, d.h. dem Radialspiel zwischen dem Innenring und dem Außenring, und der Gesamtkraft auf das Lager ab. Die Gesamtkraft auf das Lager, die im wesentlichen die Gleichkraft (Schwerkraft), die Unwuchtkraft, die Axialkraft (in Fig. 1 mit Fa bezeichnet) und die Zentrifugalkraft umfaßt, ist wegen der Zentrifugalkraft und Unwuchtkraft drehzahlabhängig und zeitabhängig, wobei die Zentrifugalkraft nur auf die Außenringkontaktsteifigkeit 6 der Wälzkörper wirkt. Die Verteilung der Gesamtkraft ist von den Durchmessern der Wälzkörper und ihrer Form abhängig.

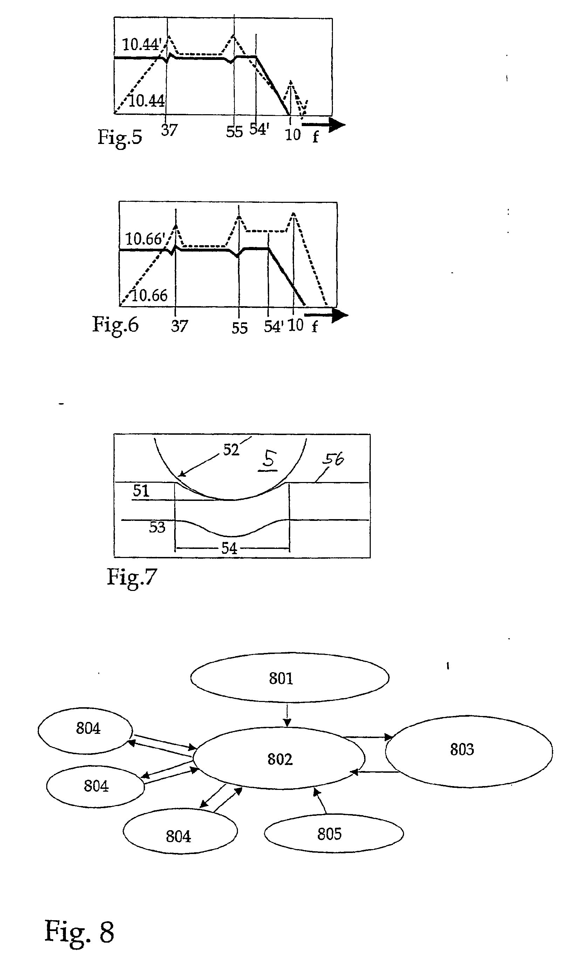

Mit 44 bzw. 66 ist in Fig. 3 ein Innenringkontaktschaden bzw. ein Außenringkontaktschaden bezeichnet, wobei im folgenden angenommen wird, daß es sich dabei um einen Schaden in der Innenringlauffläche bzw. der Außenringlauffläche handelt. Ebenso könnte ein Kontaktschaden natürlich auch durch einen Schaden auf der Lauffläche eines Wälzkörpers gebildet werden, wobei der Schaden jedoch dann entsprechend dem Abrollen des Wälzkörpers abwechselnd im Innenringkontakt und im Außenringkontakt auftritt. Solche Fälle sollen der Einfachkeit halber hier nicht betrachtet werden. In Fig. 7 ist ein Außenring- bzw. Innenringlaufflächenschaden schematisch als Vertiefung in der Lauffläche dargestellt, in welche ein Wälzkörper 5 mit einem Durchmesser 52 eintaucht. Die Schadenstiefe 51 ergibt sich als die Strecke, um welche der Wälzkörper 5 beim Überrollen des Schadens in radialer Richtung bezüglich der unbeschädigten Lauffläche 56 "abtaucht" bzw. ausgelenkt wird. Als 100% effektive Schadenstiefe soll im folgenden die Schadenstiefe betrachtet werden, bei welcher ein Wälzkörper 5 gerade so tief in den Schaden eintauchen kann, daß er die Summe der Kräfte, die momentan auf ihn wirken, nicht mehr trägt, d.h. bei einer 100% effektiven Schadenstiefe trägt die Lauffläche an der Schadensstelle nicht mehr zu der Lagerwirkung bei und ist in diesem Sinne 100% geschädigt. Der Bezug auf die momentan wirkenden Kräfte ist insofern sinnvoll, als bei unterbelasteten Lagern ansonsten nie eine Schadenstiefe von 100% ermittelt würde und die Lager dennoch ausfallen könnten (Eine Schadenstiefe von mehr als 100% ist möglich, wenn mehrere Wälzkörper gleichzeitig nicht mehr tragen, z.B. bei Stillstandserosion). Die Kontaktfehler 44 bzw. 66 in Fig. 3 sind in diesem Sinne als 100% effektiv zu verstehen, d.h. an dieser Stelle trägt die Lauffläche nicht mehr.

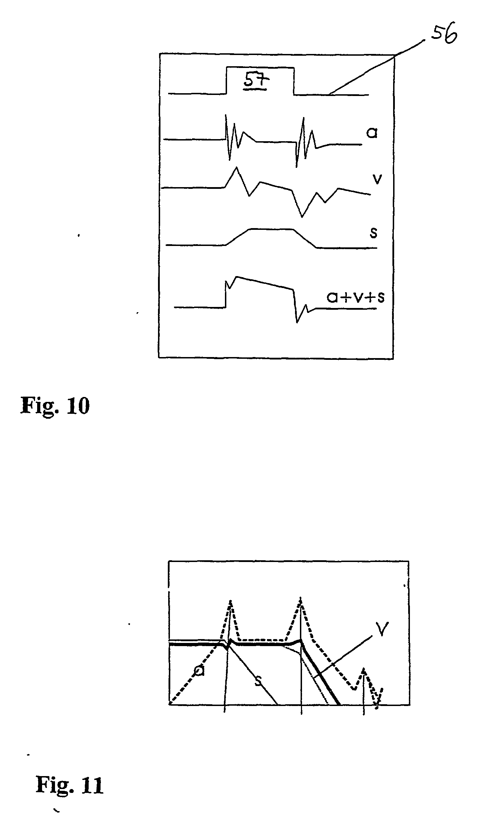

In Fig. 10 ist schematisch dargestellt, welches Wegsignal s, Geschwindigkeitssignal v und Beschleunigungssignal a ein Schaden 57 in einer Lauffläche 56 beim Überrollen durch einen Wälzkörper 5 erzeugt, wobei eine Vertiefung mit steilen Kanten, die relativ lang bezüglich des Wälzkörperdurchmessers 52 ist, angenommen ist. Beim Eintauchen bzw. Austreten aus dem Schaden 57 erzeugt der Wälzkörper 5 dabei im Beschleunigungssignal a jeweils eine impulsartige Anregung, während im Geschwindigkeitssignal v eine gleichmäßigere breitere Anregung auftritt. Im Wegsignal zeigt sich dagegen eine flache breite Anregung, die im wesentlichen einer Tiefpaßfilterung des Schadenprofils entspricht. Dementsprechend ist das Beschleunigungssignal a vor allem für im Verhältnis zum Wälzkörperdurchmesser 52 kurze Schäden geeignet, während das Geschwindigkeitssignal v für mittlere und das Wegsignal s für lange Schäden geeignet sind.

In Fig. 4 sind die frequenzabhängigen Übertragungsfunktionen für einen Innenringkontaktfehler 44 bzw. einen Außenringkontaktfehler 66 gezeigt, d.h. das frequenzabhängige Verhältnis zwischen einer durch den Schaden erzeugten Kraftänderung 44 und 66 und der entsprechenden Beschleunigung an der Koppelungsstelle des Schwingungsaufnehmers 10, wie sie sich aus dem Schwingungsmodell von Fig. 3 ergeben. Daraus ist ersichtlich, daß sich das Übertragungsverhalten für einen Innenringschaden (in Fig. 4 mit 10.44 bezeichnet) von dem eines Außenringsschadens (in Fig. 4 mit 10.66 bezeichnet) vor allem in dem Bereich jenseits der Wälzkörperresonanzfrequenz 55 unterscheidet, wo eine auf einen Innenringschaden zurückgehende Anregung mit zunehmender Frequenz gedämpft wird, während eine auf einen Außenringschaden zurückgehende Anregung nicht gedämpft wird. Beiden Schadensarten bzw. Schadensorten ist gemein, daß im Bereich zwischen der Lagerresonanz 37 und der Wälzkörperresonanz 55 die Übertragungsfunktion flach ist, d.h. die Beschleunigung an der Kopplungsstelle des Beschleunigungsaufnehmers 10 ist in etwa proportional zu der durch den Schaden erzeugten Kraftänderung 44 bzw. 66, während in dem Bereich unterhalb der Lagerresonanz 37 die Ausbreitung beider Anregungen mit abnehmender Frequenz gedämpft wird. Ohne Korrektur des Frequenzgangs bzw. der Übertragungsfunktion für Außenring- bzw. Innenringschäden könnte somit nur im Bereich zwischen der Lagerresonanz 37 und der Wälzkörperresonanz 55 von der Beschleunigungsamplitude, wie sie mit dem Aufnehmer 10 ermittelt wird, auf die Schadenstiefe (welche über die Kontaktsteifigkeit mit der Kraftänderung an der Schadenstelle verknüpft ist) rückgeschlossen werden, da nur in diesem Bereich die erforderliche Proportionalität zwischen der durch den Schaden verursachten Anregung (Kraftänderung 44 bzw. 66, d.h. Schadenstiefe) und dem Beschleunigungssignal besteht. Da jedoch in der Regel relevante Schadenssignale auch außerhalb dieses Frequenzbereichs auftreten, ist es für eine zuverlässige Schadenssignalamplitudenskalierung bzw. -auswertung erforderlich, den Frequenzgang bzw. die Schadensübertragungsfunktion in dem gesamten Frequenzbereich, in welchem Schadenssignale auftreten können, zu linearisieren, wie dies in Fig. 5 und 6 mit der durchgezogenen Linie dargestellt ist. In Fig. 5 und 6 ist zusätzlich mittels der unterbrochenen Linie der entsprechende unkorrigierte Frequenzgang für einen Innenringkontaktschaden bzw. Außenringkontaktschaden dargestellt, wobei zusätzlich zu Fig. 4 noch die Resonanz des Aufnehmers 10 berücksichtigt ist (in Fig. 5 und 6 ist die entsprechende Resonanzfrequenz mit dem Bezugszeichen 10 bezeichnet).

Mit dem Bezugszeichen 54' ist in Fig. 5 und 6 eine Frequenz bezeichnet, die im folgenden als "energiereichste Maximalschadensfrequenz" bezeichnet wird, wobei diese in folgender Weise berechnet wird. Aus der 100% effektiven Schadenstiefe (in Fig. 7 mit 51 bezeichnet) und dem Wälzkörperdurchmesser 52 läßt sich das in den Schaden eindringende (oder das abgeplattete) Kreissegment berechnen. Daraus ergibt sich die in Fig. 7 mit dem Bezugszeichen 53 bezeichnete Abtastform, welche dem Laufflächenprofil 55 entspricht, wie es von dem den Schaden überrollenden Wälzkörper 5 gesehen wird, und damit der Kraft im Wälzkörper 5 entspricht. Mit 54 ist in Fig. 7 die Länge des eindringenden Kreissegments bezeichnet, wobei der Kehrwert der Länge 54 der Ortsfrequenz des kürzestmöglichen 100% effektiven Schadens entspricht, welche durch die Überrollgeschwindigkeit des Wälzkörpers 5 in eine (Zeit)-Frequenz umgerechnet werden kann. Die so erhaltene Frequenz entspricht der energiereichsten Maximalschadensfrequenz 54'. Es versteht sich, daß die Abtastform bzw. Schadensform 53 auch noch höhere Frequenzanteile enthält und damit auch noch Beschleunigungsschadenssignale mit höheren Frequenzen erzeugt, wobei jedoch auf diese höheren Frequenzanteile eine geringere Energie als auf die Frequenz 54' entfällt. Aus diesem Grund ist es für eine zuverlässige Signalamplitudenauswertung ausreichend, wenn die Übertragungsfunktion 10.44' bzw. 10.66' mindestens bis zu dieser energiereichsten Maximalschadensfrequenz 54' linearisiert wird, wie dies in Fig. 5 und 6 dargestellt ist.

In einem Frequenzbereich, in welchem die Übertragungsfunktion linear, d.h. in der Darstellung von Fig. 5 und 6 eben ist, kann die Schadenstiefe 51, da dann die Kraftänderung 44 bzw. 66 an der Schadensstelle beim Überrollen durch einen Wälzkörper 5 proportional zu der mittels des Sensors 10 gemessenen Beschleunigung ist, aus der gemessenen Beschleunigungsamplitude und der Wälzkörperkontaktsteifigkeit 4 bzw. 6 berechnet werden, wobei, da der Sensor 10 die Beschleunigung an der Lagerbockmasse 7 aufnimmt, noch auf diese normiert werden muß. Die Schadenstiefe ergibt sich somit als Produkt aus Beschleunigungssignalamplitude mal Lagerbockmasse geteilt durch die Wälzkörperkontaktsteifigkeit. Bei unkorrigiertem Frequenzgang 10.44 bzw. 10.66 gilt dies, wie oben erwähnt, nur für den Frequenzbereich zwischen der Lagerresonanz 37 und der Wälzkörperresonanz 55. Diese Resonanzfrequenzen 37 und 55 wiederum können bei Kenntnis der in das Schwingungsmodell von Fig. 3 eingehenden Parameter mittels des Schwingungsmodells berechnet werden. Außerhalb dieses Bereichs dagegen ist eine Linearisierung der Übertragungsfunktion erforderlich, um aus der Beschleunigungssignalamplitude auf die Schadenstiefe schließen zu können. Für eine vollständige Beschreibung der Maschine aus Fig. 1 und 2 mittels des Schwingungsmodells von Fig. 3 ist die Kenntnis der Gleichkraft (Gewichtskraft), der Unwuchtkraft, ggfs. der Axialkraft Fa, der Zentrifugalkraft der Wälzkörper, der Steifigkeiten 4, 6, 2 bzw. 8 der Wälzkörper, der Welle bzw. des Lagerbocks sowie der Massen 7, 1, 5 bzw. 9 des Lagerbocks, des Rotors, der Wälzkörper bzw. des Fundaments erforderlich. Dabei sind jedoch nicht alle Parameter gleich wichtig für die Amplitudenauswertung und können geschätzt bzw. weggelassen werden. Der für die Amplitudenauswertung wichtigste Parameter ist jedoch die Wälzkörperkontaktsteifigkeit 4 bzw. 6, so daß diese in jedem Fall berücksichtigt wird, wobei jedoch beispielsweise bei einer Auswertung des Signals hinsichtlich der Innenringschadensamplitude gegebenenfalls nur die Innenringkontaktsteifigkeit 4 berücksichtigt wird und bei einer Analyse hinsichtlich Außenringschäden nur die Außenringkontaktsteifigkeit 6 berücksichtigt wird.

Vorzugsweise werden jedoch alle genannten Parameter berücksichtigt, um ein möglichst zutreffendes Schwingungsmodell der Maschine zu erhalten und somit die Beschleunigungssignalamplitude möglichst zuverlässig hinsichtlich der Übertragungsfunktion korrigieren zu können, um die für das Beschleunigungssignal verantwortliche Schadenstiefe möglichst genau angeben zu können.

Fig. 8 gibt schematisch den Datenfluß für ein Wälzlageranalysesystem wieder, wobei für einen bestimmten Maschinentyp, eine bestimmte Bauart bzw. eine bestimmte Baureihe relevante Kenngrößen bzw. Parameter in Abhängigkeit von dem Lagerdurchmesser gebildet werden (dies ist bei 803 angedeutet) und in einer Datenbank 802 gespeichert werden. Falls eine Maschine zu analysieren ist, die noch nicht auf diese Weise typisiert ist, können die erforderlichen Kenngrößen vor Ort rechnergestützt erfaßt werden (dies ist mit 804 angedeutet), wobei die gewonnenen Daten in die Datenbank 802 einfließen und, sofern bereits mehrere Maschinen dieses Typs erfaßt wurden, gemäß 803 typisiert werden. 801 bezeichnet in Fig. 8 den Datenfluß von dem Maschinen- bzw. Lagerhersteller, während 805 den Datenfluß bei Rückmeldung von überprüften Schadensfällen bezeichnet.

Die Datenbank 802 enthält beispielsweise Lagerdaten der folgenden Art: kombinierte Lager werden in die einzelnen Lagerarten aufgeteilt und nacheinander bewertet. Bei mehrreihigen Lagern wird bei der Gesamtsteifigkeit und der Anzahl der tragenden Wälzkörper die Reihenzahl berücksichtigt. Die von dem Lagerhersteller angegebene Lagersteifigkeit wird in eine Innenringkontaktsteifigkeit und eine Außenringkontaktsteifigkeit aufgeteilt, wobei die Summe der Federkonstanten konstant bleibt und wobei die Form von Wälzkörper und Lauffläche durch die Schmiegung berücksichtigt wird, wobei beispielsweise folgende "Schmiegesteifigkeiten" berücksichtigt werden können: Zylinder-Fläche: cs = 32, Kugel-Rille: cs = 8, Kugel-Fläche: cs = 2. Ferner werden die Anzahl sowie Länge oder Masse der Wälzkörper, der Teilkreisdurchmesser, der Wälzkörperdurchmesser, der Kontaktwinkel für die Überrollfrequenzen sowie die Lagerluft berücksichtigt.

Bei der Erfassung einer noch nicht typisierten Maschine vor Ort gemäß 804 kann beispielsweise wie folgt vorgegangen werden: es wird zunächst das Schwingungsmodell gemäß Fig. 1, 2 bzw. 3 editiert, wobei aus der Eingabe der Maschinengeometrie die Massen, Kräfte und Wellensteifigkeiten folgen. Die Übertragungsverhältnisse bzw. die Übertragungsfunktion zwischen Welle und Lagerbock bzw. Lagerbock und Fundament werden gemessen, wobei ein zweiter Aufnehmer, insbesondere am Lagerfundament, vorgesehen sein kann, um die Übertragungsverhältnisse bei laufender Maschine zu messen, oder indem ein Anschlagversuch bei stehender Maschine durchgeführt wird, wobei ein Maschinenelement impulsartig angeregt wird und mit dem Beschleunigungsaufnehmer die Systemantwort erfaßt wird. Prinzipiell könnte jedoch auch das aus Lager und Maschine gebildete System mittels des Finite-Elemente-Verfahrens modelliert werden. Durch diese Übermittlung der Übertragungsverhältnisse zwischen Welle und Lagerbock bzw. Lagerbock und Fundament ist das Schwingungsmodell auch zur Behandlung von verteilten Masse-Feder-Schwingungssystemen geeignet.

Anschließend werden aus den Lagerdaten Schätzwerte für die Resonanzfrequenzen ermittelt. Sofern mit diesen Schätzwerten Lagerschäden gefunden werden, werden die auftretenden Resonanzfrequenzen gemessen und die Schätzwerte werden verbessert. Da, wie bereits oben erwähnt, nicht immer alle Schwingungsmodellparameter für das Ergebnis relevant sind und zudem untereinander mathematisch verknüpft sind, kann oft auf einen Teil der Parameter verzichtet werden oder es ist nur eine grobe Schätzung erforderlich. Das Analysesystem ist dabei so ausgebildet, daß es dem Bediener angibt, welche Daten erforderlich sind bzw. welche Daten ersatzweise verwendet werden können.

Die so ermittelten Werte werden miteinander verrechnet und schließlich mit dem Winkel des Aufnehmers bezüglich der resultierenden Lastrichtung korrigiert (Multiplikation mit 1- cosα), so daß der Schaden und die Kenngrößen der erfaßten Maschine erhalten werden.

Vorzugsweise ist die Datenbank 802 so ausgebildet, daß eine "Selbstlernfunktion" implementiert ist, wobei die in das Schwingungsmodell eingehenden Parameter mittels der Überprüfung von der von dem Modell gelieferten Ergebnisse überprüft und gegebenenfalls korrigiert werden. Dabei werden die in der Datenbank 802 gespeicherten Daten mit einem Konfidenzfaktor bewertet, der die Herkunft und somit Verläßlichkeit des jeweiligen Parameters widerspiegelt. So können beispielsweise selbst nachgemessene Daten mit 100%, Herstellerangaben mit 90%, indirekt gemessene Daten mit 80%, aus einer Typisierung ermittelte Daten (803) mit 70%, indirekte Herstellerangaben, die aus anderen Angaben berechnet sind, mit 60%, aus Angaben anderer Hersteller berechnete Daten mit 50%, mehrfach indirekt gemessene Daten mit 40%, Schätzungen mit 30%, Daten unbekannter Herkunft mit 20% und Default-Werte mit 10% bewertet werden. Nach jeder erfolgreichen Messung, d.h. wenn ein Schaden gefunden wurde, fließen alle Maschinen- und Lagerdaten (804) in die Datenbank zurück, wobei eine Ausgleichsrechnung unter Berücksichtigung (Gewichtung) der Konfidenzfaktoren erfolgt. Korrigiert werden dabei jedoch nur Daten, deren Konfidenzfaktor kleiner als 100% ist. Auch die Konfidenzfaktoren werden entsprechend dem Überprüfungsergebnis angepaßt, wobei bei der Korrektur der Daten der alte und der neue Konfidenzfaktor berücksichtigt werden. Die Konfidenzfaktoren können beispielsweise dadurch angepaßt werden, daß bei einem gefundenen Schaden der Konfidenzfaktor auf (alter Konfidenzfaktor + 100%) / 2 gesetzt wird.

Insbesondere kann bei einem von dem System ermittelten Schaden das entsprechende Lager demontiert und inspiziert werden, um den Schaden zu verifizieren. Falls dabei das Analyseergebnis des Systems bestätigt wird, wird eine Erfolgsmeldung 805 abgesetzt und die entsprechenden Daten werden mit dem Restfehler korrigiert, wobei ihr Konfidenzfaktor beispielsweise nochmals auf (alter Konfidenzfaktor + 100%) / 2 erhöht werden kann. Falls sich die Schadensdiagnose des Systems nicht bestätigt, müssen die Ursachen dafür erforscht werden.

Insgesamt kann durch die beschriebene Vorgehensweise die Datenbank laufend verbessert werden, wodurch die Daten zunehmend vertrauenswürdiger werden und die Diagnosegenauigkeit verbessert werden kann.

Die in Fig. 5 und 6 gezeigte Linearisierung der Schadensübertragungsfunktion kann beispielsweise dadurch bewerkstelligt werden, daß aus der ermittelten Übertragungsfunktion die dazu inverse Funktion gebildet wird, um das gemessene Beschleunigungssignal damit zu filtern, um die "echte" Schadensamplitude und damit die Schadenstiefe zu ermitteln.

Die Linearisierung der Übertragungsfunktion kann jedoch auch beispielsweise dadurch erzielt werden, daß aus dem gemessenen Beschleunigungssignal a durch Integration das Geschwindigkeitssignal v sowie das Wegsignal s gebildet werden und mit bestimmter Gewichtung die Summe aus diesen drei Signalen gebildet wird (siehe Fig. 10). Falls dabei die Gewichtung der einzelnen Signale richtig gewählt wird, ergibt sich eine Rekonstruktion des Schadensprofils (vergleiche Fig. 10 oben und unten). Die richtige Gewichtung der Signale kann aus dem Schwingungsmodell ermittelt werden, wobei die frequenzabhängigen Übertragungsfunktionen für das Geschwindigkeitssignal und das Wegsignal in analoger Weise wie für das Beschleunigungssignal ermittelt werden und das Geschwindigkeitssignal und das Wegsignal dann so gewichtet werden, daß ihre Übertragungsfunktionen bei der Lagerresonanz 37 den Wert 1, d.h. eine Verstärkung 1, haben, siehe Fig. 11, wo die Übertragungsfunktionen für einen Innenringschaden dargestellt sind. In diesem Fall ergibt sich für das Summensignal der in Fig. 11 mit der dicken durchgezogenen Linie angegebene Frequenzgang, der zumindest bis zu der Wälzkörperresonanz 55 flach, d.h. linear, ist. Insbesondere hat die Addition des Beschleunigungssignals a und des Wegsignals s aufgrund der Phasenverschiebung von 180° zwischen den beiden Signalen die Unterdrückung der Lagerresonanz 37 zur Folge, siehe Fig. 11.

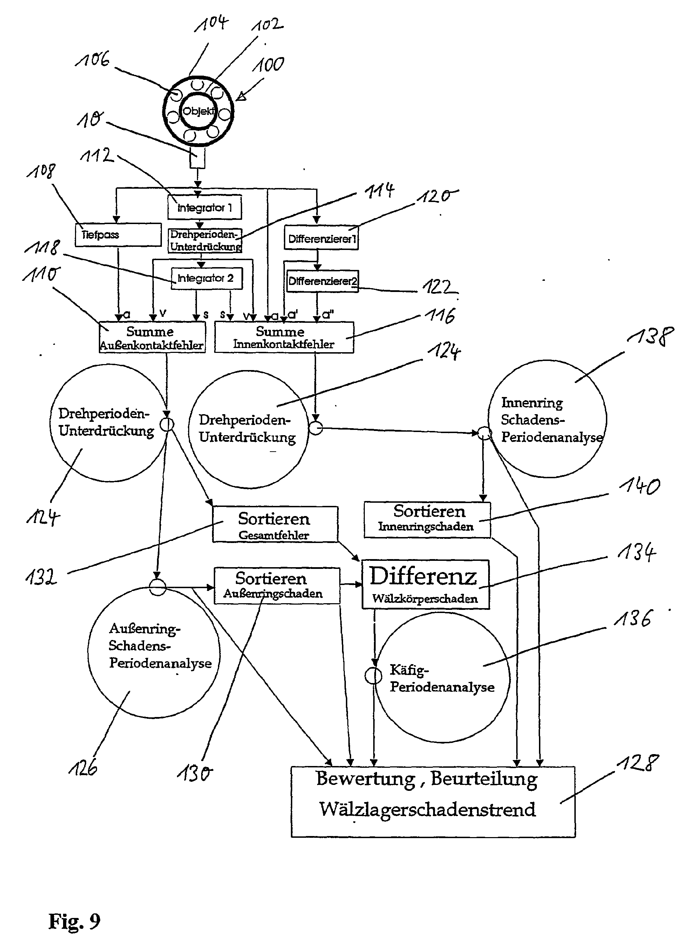

In Fig. 9 ist eine Vorrichtung schematisch dargestellt, wobei an einem Wälzlager 100 mit einem Innenring 102, einem Außenring 104 und mehreren Wälzkörpern 106 mittels eines Beschleunigungsaufnehmers 10, welcher mit dem Außenring 104 gekoppelt ist, ein Beschleunigungssignal aufgenommen wird, das durch die Bewegung der Wälzkörper 106 verursacht wird. Das Ausgangssignal des Sensors 10 wird auf vier Zweige verteilt, wobei der erste nach Durchlaufen eines Tiefpasses 108 mit einer Eckfrequenz, welche der energiereichsten Maximalschadensfrequenz 54' entspricht, einem Summierer 110 zugeführt wird. Mittels des Tiefpasses 108 werden störende hochfrequente Anteile, insbesondere die Aufnehmerresonsanz, ausgeblendet. Ein anderer Zweig wird einem Integrator 112 zugeführt, dessen Ausgangssignal mittels einer Drehperiodenunterdrückungsstufe 114 von Signalanteilen befreit wird, welche die Periodizität der Drehung der gelagerten Welle haben. Das so erhaltene Geschwindigkeitssignal wird einerseits dem Summierer 110 und andererseits einem Summierer 116 sowie einem Integrator 118 zugeführt. Das Ausgangssignal des Integrators 118, welches dem Wegsignal s entspricht, wird sowohl dem Summierer 110 als auch dem Summierer 116 zugeführt. Ein dritter Zweig des gemessenen Beschleunigungssignals a wird dem Summierer 116 zugeführt, während ein vierter Zweig einer zweimaligen Differenzierung mittels eines Differenzierers 120 und eines Differenzierers 122 unterzogen wird. Die Ausgangssignale der Differenzierer 120 bzw. 122 werden dem Summierer 116 zugeführt.

Die Verstärkungen der Integratoren 112 und 118 sind so eingestellt, daß sich die nach der oben erwähnten Vorschrift gebildete Gewichtung der Signale a, v und s in dem Summierer 110 ergibt. Die richtige Gewichtung für die erste und die zweite Ableitung der Beschleunigung in der in dem Summierer 116 gebildeten Summe ergibt sich durch entsprechendes Einstellen der beiden Differenzierer 120 und 122, wobei der Frequenzgang der ersten und der zweiten Ableitung ermittelt wird und die Gewichtung so gewählt wird, daß die beiden Ableitungen bei der Wälzkörperresonanz 55 die Verstärkung 1 haben, um den Abfall der Übertragungsfunktion für das Beschleunigungssignal bzw. des Summensignals aus a, v und s jenseits der Wälzkörperresonanz 55 zu kompensieren.

Das Ausgangssignal des Summierers 110 dient zur Auswertung des Signals hinsichtlich von Außenkontaktschäden bzw. Außenringschäden, während das Ausgangssignal des Summierers 116 zur Auswertung des Signals hinsichtlich von Innenkontaktschäden bzw. Innenringschäden verwendet wird. Insgesamt handelt es sich bei der bisher beschriebenen Signalaufbereitung um eine schadenslängenproportionale Signalaufbereitung, bei welcher durch den Übertragungsweg von der Schadensstelle zu dem Aufnehmer 10 durch die nichtlinearen Übertragungsfunktionen erfolgten Verzerrungen des Signals kompensiert werden, so daß das "echte" Schadensignal rekonstruiert werden kann. Bei dem Ausgangssignal der Summierer 110 und 116 handelt es sich um ein solche rekonstruiertes Schadenssignale für Außenringschäden bzw. Innenringschäden, welche dadurch schadenslängenproportional bzw. schadenslängentreu sind.

Aus diesem rekonstruierten Signal werden nun mittels zweier hier sogenannter Periodenformfilter 124 störende Signalanteile, welche die Periode der Drehung der gelagerten Welle haben, eliminiert. Das Filtern von Signalen bezüglich periodischer Signalanteile ist in einer parallelen Patentanmeldung detailliert beschrieben. Bei einem Periodenformfilter handelt es sich demgemäß um eine Vorrichtung mit einem Signaleingang, der einen rotierenden Ringspeicher speist, der von zyklisch angeordneten Speicherelementen gebildet wird, die entsprechend der Rotationsfrequenz nacheinander jeweils mit dem Eingang verbunden werden, sowie einer Synchronisierungseinrichtung, um die Rotationsfrequenz mit der Periodendauer der gesuchten Signalanteile zur Übereinstimmung zu bringen. Sobald das Periodenformfilter "eingeschwungen" ist, d.h. nach einer bestimmten Anzahl von Umdrehungen, bildet der Inhalt der Speicherelemente einen Signalzug mit der gesuchten Periodenlänge, der im wesentlichen nur (die über mehrere Perioden gemittelte bzw. summierte) Signalanteile mit dieser Periodendauer enthält. Die Periodenformfilter 124 sind dabei auf die Wellendrehfrequenz synchronisiert. Das so von Drehperiodenanteilen befreite Ausgangssignal des Summierers 110 wird einerseits einem weiteren Periodenformfilter 126 zugeführt, welches auf die Überrollfrequenz des Außenrings synchronisiert ist, um alle Signalanteile, welche die Periodizität einer Überrollperiode des Außenrings haben, aus dem Signal zu separieren, um diese Signalanteile weiter auszuwerten. Dabei wird das Ausgangssignal des Periodenformfilters 126 einerseits direkt einer Diagnoseeinheit 128 zugeführt und andererseits einer Sortiereinheit 130 zugeführt, in welcher das Signal dadurch bearbeitet wird, daß es hinsichtlich seiner Amplitude sortiert wird, um Strukturen aus dem Signal zu eliminieren, welche auf Phasendifferenzen während der Signalgewinnung in dem Periodenformfilter 126 zurückzuführen sind. Bei der Amplitudensortierung werden die diskreten Amplitudenwerte (bei digitalen Periodenformfiltern ist das Signal bereits digitalisiert, ansonsten wird es vorher digitalisiert) des von dem Periodenformfilter 126 gelieferten Signalzugs entsprechend ihrer Größe sortiert, d.h. es ergibt sich ein Signalzug gleicher Länge, der aber nun zum Beispiel mit der größten Amplitude beginnt und mit der kleinsten endet.

Das Ausgangssignal der Sortierstufe 130 wird ebenfalls der Diagnoseeinheit 128 zugeführt und repräsentiert einen eventuellen Außenringschaden. Ferner wird das mittels des Periodenformfilters 124 von Drehperiodenanteilen befreite Ausgangssignal des Summierers 110 einer Sortiereinheit 132 zugeführt, wo das Signal einer Amplitudensortierung nach der Amplitudengröße unterzogen wird. Das Ausgangssignal des Sortierers 132 repräsentiert Schäden, die sowohl von dem Außenring als auch von Wälzkörpern herrühren können. Indem die Ausgangssignale der beiden Sortierer 130 und 132 in einem Subtrahierer 134 voneinander subtrahiert werden, kann ein Signal gewonnen werden, welches Wälzkörperschäden repräsentiert. Um eine Auflösung bezüglich der einzelnen Wälzkörper zu erzielen, wird das Ausgangssignal des Differenzierers 134 einem weiteren Periodenformfilter 136 zugeführt, welches auf die Rotationsfrequenz des Lagerkäfigs synchronisiert ist, wobei dessen Ausgangssignal schließlich ebenfalls der Diagnoseeinheit 128 zugeführt wird. Das von Drehperiodenanteilen befreite Ausgangssignal des Summierers 116 wird einem Periodenformfilter 138 zugeführt, welches auf die Innenringüberrollfrequenz synchronisiert ist, wobei das so gewonnene Innenringschadenssignal einerseits direkt der Diagnoseeinheit 128 zugeführt wird und andererseits zwecks Korrektur von Phasenunterschieden in einem Sortierer 140 amplitudensortiert wird.

In der Diagnoseeinheit 128 schließlich wird aus der Signalamplitude die Schadenstiefe ermittelt, während aus dem Signalverlauf die Schadenslänge ermittelt wird. Die so ermittelte Schadenstiefe und Schadenslänge kann als Funktion der Zeit erfaßt werden, wobei dann aus dem ermittelten zeitlichen Verlauf auf den Ausfallzeitpunkt des Lagers extrapoliert werden kann, wobei als der Ausfallzeitpunkt der Zeitpunkt angenommen wird, zu welchem ein Lagerring nur noch Laufflächenbereiche aufweist, bei welchen ein maximal eintauchender Wälzkörper keine Kraft auf den beschädigten Lagerring überträgt, d.h. 100% der Lauffläche sind zu 100% effektiv geschädigt.

Um die Signalauswertung bei hohen Frequenzen zu verbessern, kann das Ausgangssignal des Aufnehmers 10 auch vor der beschriebenen Signalaufbereitung einer Hüllkurvenbildung unterzogen werden.

## Patentansprüche

1. Verfahren zur Analyse von in Maschinen eingebauten Wälzlagern (15, 100), wobei mittels eines Sensors (10) ein Beschleunigungssignal aufgenommen wird, welches durch die Abrollbewegung erzeugt wird, und die Amplitude des Beschleunigungssignals ausgewertet wird, um zu ermitteln, ob ein Schaden in einer Wälzlagerlauffläche (56) vorliegt und, falls ein solcher Schaden ermittelt wurde, die Tiefe des Schadens zu ermitteln, **dadurch gekennzeichnet, dass** ein dynamisches Modell des Wälzlagers in der Maschine verwendet wird, in welches mindestens die beiderseitigen Kontaktsteifigkeiten (4, 6) der Wälzkörper eingehen, um die Übertragungsfunktion zwischen einer von dem Schaden verursachten Kraft und dem entsprechenden Beschleunigungssensorsignal im gesamten Frequenzbereich, in dem Schadenssignale auftauchen können, zu linearisieren, wobei die linearisierte Übertragungsfunktion für die Ermittlung der Schadenstiefe aus der gemessenen Beschleunigungssignalamplitude verwendet wird.

2. Verfahren nach Anspruch 1, **dadurch gekennzeichnet, daß** die Übertragungsfunktion in Abhängigkeit von dem Schadensort ermittelt wird.

3. Verfahren nach Anspruch 2, **dadurch gekennzeichnet, daß** für Schäden auf jedem der beiden Lagerringe eine eigene Übertragungsfunktion ermittelt wird.

4. Verfahren nach Anspruch 3, **dadurch gekennzeichnet, daß** in das dynamische Modell die auf das Lager (15, 100) und insbesondere die Wälzkörper (5, 106) wirkenden Gleich-, Unwucht-, Zentrifugal-, und ggfs. Axialkräfte eingehen, zumindest soweit sie einen bestimmten Schwellwert übersteigen.

5. Verfahren nach einem der vorhergehenden Ansprüche, **dadurch gekennzeichnet, daß** in das dynamische Modell die Massen (1, 3, 7, 9) und Steifigkeiten (2, 8) der mit dem Lager (15, 100) gekoppelten Maschinenelemente eingehen.

6. Verfahren nach einem der vorhergehenden Ansprüche, **dadurch gekennzeichnet, daß** aus dem dynamischen Modell die Tiefe eines Schadens ermittelt wird, die unter den momentan herrschenden Bedingungen gerade dazu führt, daß ein Wälzkörper (5, 106) keine Kraft mehr überträgt.

7. Verfahren nach Anspruch 6, **dadurch gekennzeichnet, daß** zur Lagerdiagnose die aktuell ermittelte Schadenstiefe auf die Schadenstiefe bezogen wird, die unter den momentan herrschenden Bedingungen gerade dazu führt, daß ein Wälzkörper (5, 106) keine Kraft mehr überträgt.

8. Verfahren nach einem der vorhergehenden Ansprüche, **dadurch gekennzeichnet, daß** der Signalanteil mit der Überrollperiode des Schadens aus dem Sensorsignal separiert wird und dieser Signalanteil der Amplitudenbewertung unterzogen wird.

9. Verfahren nach einem der vorhergehenden Ansprüche, **dadurch gekennzeichnet, daß** aus dem Sensorsignal Anteile mit bestimmter Periode eliminiert werden und das Restsignal der Amplitudenbewertung unterzogen wird

10. Verfahren nach Anspruch 8, **dadurch gekennzeichnet, daß** aus dem separierten Signalanteil die räumliche Ausdehnung eines Schadens ermittelt wird.

11. Verfahren nach Anspruch 10, **dadurch gekennzeichnet, daß** die Schadenslänge mittels Sortieren des separierten Signalanteils nach seinen Amplituden ermittelt wird.

12. Verfahren nach Anspruch 8 bis 11, **dadurch gekennzeichnet, daß** die Separation mittels eines Periodenformfilters (126, 136, 138) erfolgt, der einen Eingang für das Signal, der einen rotierenden Ringspeicher speist, der von zyklisch angeordneten Speicherelementen gebildet wird, die entsprechend der Rotatationsfrequenz nacheinander jeweils mit dem Eingang verbunden werden, und eine Synchronisierungseinrichtung umfaßt, um die Rotationsfrequenz mit der Dauer der Überrollperiode des Schadens zur Übereinstimmung zu bringen.

13. Verfahren nach einem der vorhergehenden Ansprüche, sofern auf Anspruch 10 rückbezogen, **dadurch gekennzeichnet, daß** die Schadenstiefe und die Schadenslänge als Funktion der Zeit ermittelt wird.

14. Verfahren nach Anspruch 13, **dadurch gekennzeichnet, daß** aus dem ermittelten zeitlichen Verlauf der Schadenstiefe und der Schadenslänge der Ausfallzeitpunkt des Lagers extrapoliert wird.

15. Verfahren nach Anspruch 14, **dadurch gekennzeichnet, daß** der Ausfallzeitpunkt als der Zeitpunkt angenommen wird, zu welchem ein Lagerring nur noch Laufflächenbereiche aufweist, bei welchen ein maximal eintauchender Wälzkörper (5, 106) keine Kraft mehr auf den beschädigten Lagerring (102, 104) überträgt.

16. Verfahren nach einem der vorhergehenden Ansprüche, **dadurch gekennzeichnet, daß** mindestens ein Teil der in das dynamische Modell eingehenden Parameter mittels der Überprüfung der von dem Modell gelieferten Ergebnisse überprüft und gegebenenfalls korrigiert werden.

17. Verfahren nach Anspruch 16, **dadurch gekennzeichnet, daß** die in das dynamische Modell eingehenden Parameter mit einem Konfidenzfaktor bewertet werden, der in Abhängigkeit von der Herkunft und Verläßlichkeit des jeweiligen Parameter gewählt wird.

18. Verfahren nach Anspruch 17, **dadurch gekennzeichnet, daß** die Korrektur der Parameter mittels Ausgleichsrechnung erfolgt, wobei die Parameter entsprechend ihres Konfidenzfaktors gewichtet werden.

19. Verfahren nach Anspruch 17 oder 18, **dadurch gekennzeichnet, daß** unter Verwendung des dynamischen Modells gefundene Schäden durch Analyse des Lagers (15, 100) überprüft werden, wobei die Konfidenzfaktoren entsprechend dem Überprüfungsergebnis geändert werden.

20. Verfahren nach Anspruch 16 bis 19, **dadurch gekennzeichnet, daß** beim Vorhandensein von Schäden aus dem Sensorsignal die Resonanzfrequenzen (19, 37, 55) des Wälzlagers (15, 100) in der Maschine ermittelt werden und daraus die Werte der in das dynamische Modell eingehenden Steifigkeiten (2, 4, 6, 8) überprüft und gegebenenfalls korrigiert werden.

## Claims

1. Method for analysing rolling bearings (15, 100) which have been installed in machines, a sensor (10) being used to record an acceleration signal which is generated by the rolling movement, and the amplitude of the acceleration signal being evaluated in order to determine whether there is damage to a rolling bearing running surface (56) and, if such damage has been determined, in order to determine the depth of the damage, **characterized in that** a dynamic model of the rolling bearing is used in the machine, at least the contact rigidities (4, 6) of the rolling elements on both sides being included in said model in order to linearize the transfer function between a force caused by the damage and the corresponding acceleration sensor signal in the entire frequency range in which damage signals can occur, the linearized transfer function being used to determine the depth of the damage from the measured acceleration signal amplitude.

2. Method according to Claim 1, **characterized in that** the transfer function is determined on the basis of the location of the damage.

3. Method according to Claim 2, **characterized in that** a separate transfer function is determined for damage on each of the two bearing rings.

4. Method according to Claim 3, **characterized in that** the constant forces, unbalance forces, centrifugal forces and, optionally, axial forces which act on the bearing (15, 100) and, in particular, on the rolling elements (5, 106) are included in the dynamic model, at least if they exceed a particular threshold value.

5. Method according to one of the preceding claims, **characterized in that** the masses (1, 3, 7, 9) and rigidities (2, 8) of the machine elements coupled to the bearing (15, 100) are included in the dynamic model.

6. Method according to one of the preceding claims, **characterized in that** the depth of damage which, under the current conditions, precisely results in a rolling element (5, 106) no longer transmitting any force is determined from the dynamic model.

7. Method according to Claim 6, **characterized in that**, in order to diagnose the bearing, the currently determined depth of the damage is related to the depth of the damage which, under the current conditions, precisely results in a rolling element (5, 106) no longer transmitting any force.

8. Method according to one of the preceding claims, **characterized in that** the signal component with the rollover period of the damage is separated from the sensor signal and this signal component is subjected to amplitude assessment.

9. Method according to one of the preceding claims, **characterized in that** components with a particular period are eliminated from the sensor signal and the residual signal is subjected to amplitude assessment.

10. Method according to Claim 8, **characterized in that** the spatial extent of damage is determined from the separated signal component.

11. Method according to Claim 10, **characterized in that** the length of the damage is determined by sorting the amplitudes of the separated signal component.

12. Method according to Claims 8 to 11, **characterized in that** the separation is carried out by means of a period form filter (126, 136, 138) which comprises an input for the signal, which supplies a rotating ring memory formed by cyclically arranged memory elements which are each connected to the input in succession according to the rotation frequency, and a synchronization device in order to match the rotation frequency to the duration of the rollover period of the damage.

13. Method according to one of the preceding claims, in so far as referring back to Claim 10, **characterized in that** the depth of the damage and the length of the damage are determined as a function of the time.

14. Method according to Claim 13, **characterized in that** the failure time of the bearing is extrapolated from the determined temporal profile of the depth of the damage and the length of the damage.

15. Method according to Claim 14, **characterized in that** the failure time is assumed to be the time at which a bearing ring only has running surface areas in the case of which a rolling element (5, 106) which is immersed to the maximum extent no longer transmits any force to the damaged bearing ring (102, 104).

16. Method according to one of the preceding claims, **characterized in that** at least some of the parameters included in the dynamic model are checked and, if necessary, corrected by checking the results provided by the model.

17. Method according to Claim 16, **characterized in that** the parameters included in the dynamic model are assessed using a confidence factor which is selected on the basis of the origin and reliability of the respective parameter.

18. Method according to Claim 17, **characterized in that** the parameters are corrected by means of an adjustment calculation, the parameters being weighted according to their confidence factor.

19. Method according to Claim 17 or 18, **characterized in that** damage found using the dynamic model is checked by analysing the bearing (15, 100), the confidence factors being changed according to the result of the check.

20. Method according to Claims 16 to 19, **characterized in that**, when there is damage, the resonant frequencies (19, 37, 55) of the rolling bearing (15, 100) in the machine are determined from the sensor signal and are used to check and, if necessary, correct the values of the rigidities (2, 4, 6, 8) included in the dynamic model.

## Revendications

1. Procédé d'analyse de roulements (15, 100) intégrés dans des machines, un signal d'accélération étant enregistré au moyen d'un capteur (10), lequel est généré par le mouvement de roulement, et l'amplitude du signal d'accélération étant interprétée afin de déterminer s'il existe un dommage dans une surface de roulement du roulement (56) et, si un tel dommage a été constaté, de déterminer la profondeur du dommage, **caractérisé en ce qu'**un modèle dynamique du roulement dans la machine est utilisé, dans lequel interviennent au moins les rigidités de contact (4, 6) bilatérales de l'élément de roulement afin de linéariser la fonction de transmission entre une force provoquée par le dommage et le signal de capteur d'accélération correspondant dans toute la plage de fréquences dans laquelle peuvent se produire des signaux de dommage, la fonction de transmission linéarisée étant utilisée pour la détermination de la profondeur du dommage à partir de l'amplitude mesurée du signal d'accélération.

2. Procédé selon la revendication 1, **caractérisé en ce que** la fonction de transmission est déterminée en fonction de l'endroit du dommage.

3. Procédé selon la revendication 2, **caractérisé en ce qu'**une fonction de transmission propre est déterminée pour les dommages sur chacune des deux bagues de roulement.

4. Procédé selon la revendication 3, **caractérisé en ce que** les forces constantes, de déséquilibre, centrifuges et éventuellement axiales agissant sur le roulement (15, 100) et notamment sur les éléments de roulement (5, 106) interviennent dans le modèle dynamique, au moins dans la mesure où elles dépassent une valeur de seuil donnée.

5. Procédé selon l'une des revendications précédentes, **caractérisé en ce que** les masses (1, 3, 7, 9) et les rigidités (2, 8) des éléments de machine accouplés avec le roulement (15, 100) interviennent dans le modèle dynamique.

6. Procédé selon l'une des revendications précédentes, **caractérisé en ce qu'**à partir du modèle dynamique est déterminée la profondeur d'un dommage qui, sous les conditions qui règnent momentanément, a justement pour effet qu'un élément de roulement (5, 106) ne transmet plus de force.

7. Procédé selon la revendication 6, **caractérisé en ce que** pour réaliser le diagnostic du roulement, la profondeur de dommage actuellement déterminée se réfère à la profondeur de dommage qui, sous les conditions qui règnent momentanément, a justement pour effet qu'un élément de roulement (5, 106) ne transmet plus de force.

8. Procédé selon l'une des revendications précédentes, **caractérisé en ce que** la part du signal comprenant la période de tournage forcé du dommage est séparée du signal du capteur et cette part de signal est soumise à une évaluation de l'amplitude.

9. Procédé selon l'une des revendications précédentes, **caractérisé en ce que** les parts ayant une période donnée sont éliminées du signal du capteur et le signal restant est soumis à l'évaluation de l'amplitude.

10. Procédé selon la revendication 8, **caractérisé en ce que** l'étendue d'un dommage dans l'espace est déterminée à partir de la part de signal séparée.

11. Procédé selon la revendication 10, **caractérisé en ce que** la longueur du dommage est déterminée par tri de la part séparée du signal en fonction de ses amplitudes.

12. Procédé selon les revendications 8 à 11, **caractérisé en ce que** la séparation est effectuée au moyen d'un filtre de mise en forme de période (126, 136, 138), lequel comprend une entrée pour le signal qui alimente un accumulateur annulaire rotatif, qui est formé d'éléments accumulateurs disposés de manière cyclique qui sont à chaque fois reliés l'un après l'autre avec l'entrée en fonction de la fréquence de rotation, et un dispositif de synchronisation pour faire coïncider la fréquence de rotation avec la durée de la période de tournage forcé du dommage.

13. Procédé selon l'une des revendications précédentes, sous réserve qu'elles se rapportent à la revendication 10, **caractérisé en ce que** la profondeur du dommage et la longueur du dommage sont déterminées en fonction du temps.

14. Procédé selon la revendication 13, **caractérisé en ce que** l'instant de la panne du roulement est extrapolé à partir de l'évolution dans le temps déterminée de la profondeur du dommage et de la longueur du dommage.

15. Procédé selon la revendication 14, **caractérisé en ce que** l'instant de la panne est supposé être l'instant auquel une bague de roulement ne présente plus que des zones de surface de roulement avec lesquelles un élément de roulement (5, 106) introduit au maximum ne transmet plus aucune force sur la bague de roulement (102, 104) endommagée.

16. Procédé selon l'une des revendications précédentes, **caractérisé en ce qu'**au moins une partie des paramètres qui interviennent dans le modèle dynamique est contrôlée en vérifiant les résultats fournis par le modèle et éventuellement corrigée.

17. Procédé selon la revendication 16, **caractérisé en ce que** les paramètres qui interviennent dans le modèle dynamique sont évalués avec un facteur de confiance qui est choisi en fonction de l'origine et de la fiabilité du paramètre correspondant.

18. Procédé selon la revendication 17, **caractérisé en ce que** la correction des paramètres s'effectue au moyen d'un calcul de compensation, les paramètres étant pondérés en fonction de leur facteur de confiance.

19. Procédé selon la revendication 17 ou 18, **caractérisé en ce que** les dommages découverts en utilisant le modèle dynamique sont vérifiés par analyse du roulement (15, 100), les facteurs de confiance étant modifiés en fonction du résultat de la vérification.

20. Procédé selon les revendications 16 à 19, **caractérisé en ce qu'**en présence de dommages, les fréquences de résonance (19, 37, 55) du roulement (15, 100) dans la machine sont déterminées à partir du signal du capteur et les valeurs des rigidités (2, 4, 6, 8) qui interviennent dans le modèle dynamique sont alors vérifiées et éventuellement corrigées.
